# FASCICULE DE BREVET EUROPEEN

(11) **EP 3 825 914 B1**
(45) Date de publication et mention de la délivrance du brevet: **07.06.2023**
(21) Numéro de dépôt: 20207892.9
(22) Date de dépôt: 16.11.2020
(51) Int. Cl.: G06V 40/10, G06V 40/12, G06V 40/13, G06V 10/74, G06K 9/62

(54) **PROCÉDÉ DE COLLECTE DE MATÉRIEL BIOLOGIQUE ET TERMINAL POUR METTRE EN OEUVRE CE PROCÉDÉ**
VERFAHREN ZUM SAMMELN VON BIOLOGISCHEM MATERIAL, UND ENDGERÄT ZUR DURCHFÜHRUNG DIESES VERFAHRENS
METHOD FOR COLLECTING BIOLOGICAL MATERIAL AND TERMINAL FOR IMPLEMENTING SAID METHOD

(30) Priorité: 22.11.2019 FR 1913102
(43) Date de publication de la demande: 26.05.2021
(73) Titulaire: Idemia Identity & Security France, 92400 Courbevoie (FR)
(72) Inventeur: SERRENTINO, Maria Elisabetta, 92400 COURBEVOIE (FR); CHASTEL, Pierre, 92400 COURBEVOIE (FR)
(74) Mandataire: Idemia

(56) Documents cités:
- US-A1- 2003 197 853
- US-A1- 2012 148 115
- US-A1- 2013 287 270

## Description

### DOMAINE DE L'INVENTION

L'invention concerne le domaine de la collecte d'échantillons biologiques notamment dans le cadre d'investigations policières. L'invention concerne ainsi ce qu'on appelle aujourd'hui les sciences « forensiques ».

### ARRIERE PLAN DE L'INVENTION

Classiquement, lors d'investigation dans un lieu où a été commis un crime ou un délit (qu'on appellera dans la suite une scène de crime), il est procédé à un relevé des empreintes digitales ou palmaires-également appelées dermatoglyphes ainsi qu'à des prélèvements de matières biologiques en vue d'identifier les personnes présentes sur la scène de crime au moment dudit crime ou délit et, plus particulièrement, de caractériser une présence, inhabituelle sur les lieux, qui pourrait être suspecte.

Les moyens informatiques actuels et les bases de données accessibles aux services de police permettent une exploitation rapide et peu coûteuse des dermatoglyphes.

Tel n'est pas le cas pour les prélèvements de matière biologique qui doivent être envoyés dans un laboratoire qui établit alors un profil ADN de la personne qui a laissé la matière biologique prélevée et le compare à des profils ADN enregistrés dans des bases de données ou obtenus à partir de prélèvements effectués directement sur des personnes identifiées. Une telle analyse ADN est relativement longue (entre huit heures pour les cas urgents et plusieurs jours) et coûteuse.

En outre, lorsque la scène de crime est un lieu normalement fréquenté par un premier ensemble défini d'individus (les habitants d'un immeuble dans le cadre d'un cambriolage par exemple), il est fréquent que les matières biologiques prélevées sur la scène de crimes appartiennent majoritairement aux individus du premier ensemble dont on sait d'ores-et-déjà qu'ils étaient ou ont été présents sur la scène de crime. Il en résulte une dépense inutile.

En outre, les prélèvements de ces matières biologiques « inutiles » occasionnent une perte de temps importante pour les experts qui les réalisent in situ et ces matières biologiques peuvent représenter un volume important des analyses effectués pour une même enquête, augmentant alors le prix de revient de chaque prélèvement « utile ».

### OBJET DE L'INVENTION

L'invention a pour but de réduire les coûts et le temps qu'il est nécessaire de consacrer aux matières biologiques prélevées lors d'investigations policières.

### RESUME DE L'INVENTION

A cet effet, on prévoit un procédé de collecte de matériel biologique à l'aide d'un terminal mobile, ledit terminal mobile comprenant une unité électronique de traitement reliée à un dispositif de capture d'image et à un organe d'alerte pour commander ceux-ci. Le dispositif de capture a des caractéristiques optiques adaptées pour acquérir des images de dermatoglyphes. Le procédé de collecte comprenant les étapes suivantes mises en oeuvre par le terminal mobile :
- acquérir une première image d'un premier dermatoglyphe et en extraire un premier jeu de données biométriques candidates ;
- comparer le jeu de données biométriques candidates à des jeux de données biométriques de référence et déterminer un score de similarité entre le jeu de données biométriques candidates et chacun des jeux de données biométriques de référence ;
- comparer les scores de similarité avec un seuil prédéterminé ;
- lorsqu'aucun des scores de similarité n'est supérieur au seuil prédéterminé, émettre une première alerte
- lorsque la première alerte est émise, procéder à une collecte de matériel biologique dans une zone voisine du premier dermatoglyphe, cette étape étant mise en oeuvre par le technicien.

On obtient ainsi un procédé qui permet de discriminer rapidement, et en temps réel, les prélèvements qui pourront se révéler « utiles » des prélèvements qui seront, de manière certaine, « inutiles ». En effet, lorsque les jeux de données biométriques de référence correspondent aux données biométriques d'individus connus dont la présence sur une scène d'investigation est normale, le procédé permet de discriminer les prélèvements « utiles » des prélèvements « inutiles ».Ainsi, on réduit le volume des prélèvements et analyses pour une même scène de crimes en n'effectuant que des prélèvements supposément utiles, de sorte que le prix de revient global des prélèvements et analyses pour une même scène de crime est plus faible.

Les opérations de collecte sont plus rapides et disposent d'une meilleure traçabilité lorsque, une fois la première alerte émise, le procédé comprend une étape supplémentaire mise en oeuvre par le terminal mobile d'éditer un premier identifiant et de stocker le premier identifiant en association avec la première image. La lecture du premier identifiant est rapide lorsque le premier identifiant comprend un code barre.

Il est possible de réduire les opérations de prélèvement de matériel biologique lorsque le procédé comprend l'étape supplémentaire mise en oeuvre par le terminal mobile d'émettre une deuxième alerte lorsqu'un des scores de similarité est supérieur à un deuxième seuil prédéterminé. Ceci permet d'interrompre le calcul des scores de similarité lorsqu'un de ces scores confirme que le premier dermatoglyphe appartient bien à un individu dont la présence sur le lieu est normale.

La mise en oeuvre opérationnelle est rapide lorsque le procédé comprend une étape préliminaire d'acquérir les jeux de données biométriques de référence à l'aide du dispositif de capture. Alternativement, les jeux de données biométriques de référence sont au moins partiellement stockés sur un serveur distant et le terminal mobile comprend des moyens de communication avec le serveur distant.

Le respect de la vie privée et la confidentialité des données biométriques sont préservés lorsque le procédé comprend une étape mise en oeuvre par le terminal mobile d'effacer les jeux de données biométriques de référence à l'issue des opérations de collecte de matériel biologique.

L'invention concerne également un terminal mobile comprenant une unité électronique de traitement reliée à un dispositif de capture d'image et à un organe d'alerte pour commander ceux-ci, le dispositif de capture ayant des caractéristiques optiques adaptées pour acquérir des images de dermatoglyphes et dans lequel l'unité de traitement est programmée pour mettre en oeuvre le procédé selon l'invention.

Avantageusement, l'organe d'alerte comprend un avertisseur sonore et/ou un avertisseur lumineux et/ou un vibreur.

Avantageusement encore, le dispositif d'acquisition comprend un capteur optique.

D'autres caractéristiques et avantages de l'invention ressortiront à la lecture de la description qui suit de modes de réalisation particuliers non limitatifs de l'invention.

### BREVE DESCRIPTION DES DESSINS

La figure 1 est une représentation schématique d'un terminal selon un premier mode de réalisation de l'invention ;
La figure 2 est une représentation schématique d'une mémoire du terminal de la figure 1 ;
La figure 3 est une représentation schématique d'une scène de crime donnant lieu à une investigation conformément à l'invention ;
La figure 4 est une représentation schématique d'une deuxième étape du procédé selon l'invention ;
La figure 5 est une représentation schématique d'une empreinte digitale ;
La figure 6 est une représentation schématique du terminal dans une troisième étape du procédé selon l'invention ;

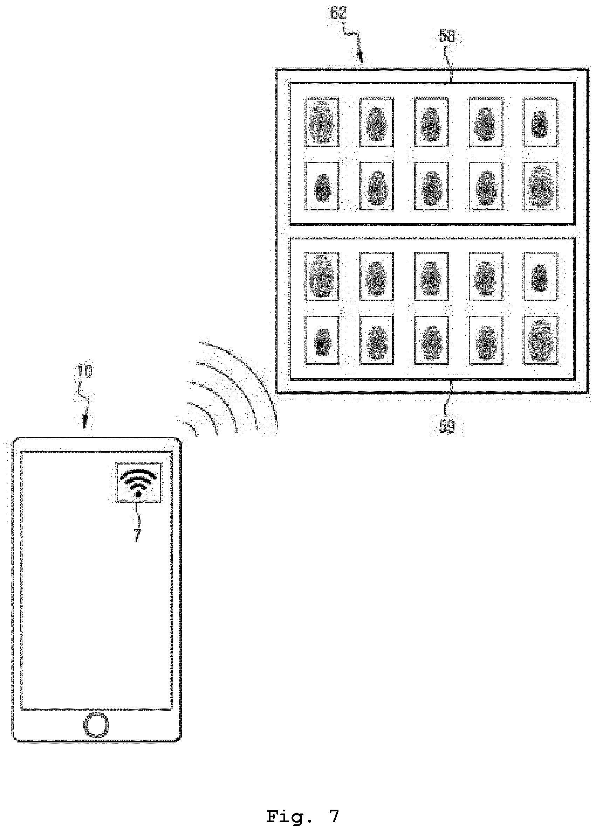

La figure 7 est une représentation schématique d'un troisième mode de réalisation de l'invention.

### DESCRIPTION DETAILLEE DE L'INVENTION

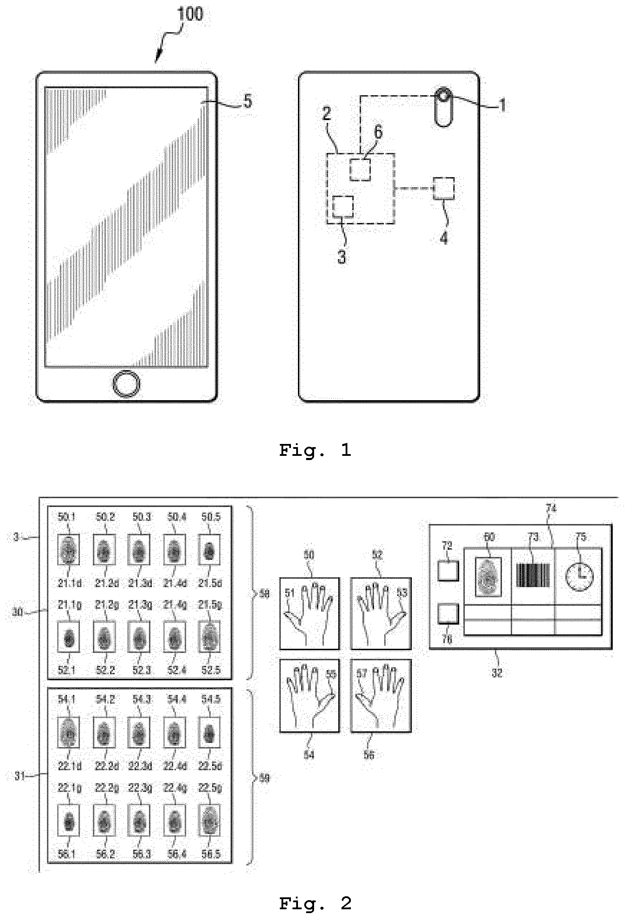

En référence aux figures 1 et 2, le terminal mobile de selon l'invention, généralement désigné 10, est un téléphone mobile de type ordiphone (couramment appelé « smartphone »). Le terminal 10 comprend un capteur optique 1 de type CCD qui est relié à un microprocesseur 2 relié à une mémoire 3. Le terminal 10 comprend également un vibreur 4 et un écran tactile 5 qui sont reliés au microprocesseur 2. La mémoire 3 comprend un programme d'exploitation du terminal 10 et un programme de reconnaissance biométrique qui sont exécutables par le microprocesseur 2. Le programme de reconnaissance biométrique comprend des instructions agencées pour extraire d'images de dermatoglyphes des caractéristiques biométriques (couramment appelées minuties) et pour calculer un score de similarité par comparaison de caractéristiques biométriques entre elles. A cette fin, le programme de reconnaissance biométrique met en oeuvre un algorithme 6, dit de « matching », connu en lui-même. La mémoire 3 comprend un premier emplacement mémoire 30, un deuxième emplacement mémoire 31, et un troisième emplacement mémoire 32.

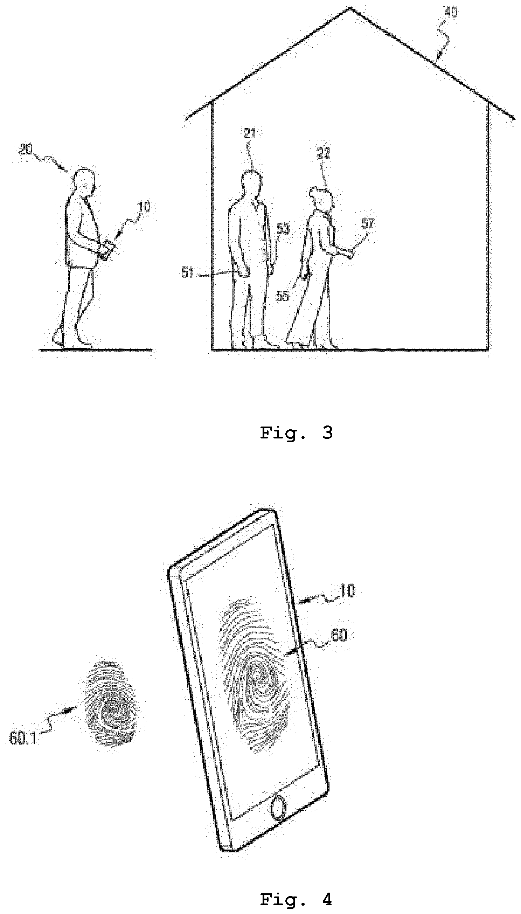

L'utilisation du terminal 10 sera décrite en relation avec des investigations, menées par un technicien 20, sur une scène 40 d'investigations, ici une maison occupée habituellement par un premier individu 21 et un deuxième individu 22 (figure 3).

Au cours d'une première étape préliminaire, le technicien 20 réalise une première acquisition d'une première image préliminaire 50 de la main droite 51 du premier individu 21, une deuxième acquisition d'une deuxième image préliminaire 52 de la main gauche 53 du premier individu 21, une troisième acquisition d'une troisième image préliminaire 54 de la main droite 55 du deuxième individu 22, une quatrième acquisition d'une quatrième image préliminaire 56 de la main gauche 57 du deuxième individu 22.

La première, la deuxième, la troisième et la quatrième acquisition sont réalisées à l'aide du capteur optique 1 du terminal 10, par exemple en photographiant les doigts des mains droite 51 et gauche 53 du premier individu 21 ainsi que des mains droite 55 et gauche 57 du deuxième individu 22. Ceci est décrit à titre d'exemple. En pratique, l'acquisition portera préférentiellement sur les mains toute entières, c'est-à-dire paume comprise, et, éventuellement, sur la surface inférieure des pieds.

De la première image préliminaire 50 de la main droite 51 du premier individu 21, le microprocesseur 2 extrait un premier jeu de minuties 50.1 du pouce droit 21.1d, un deuxième jeu de minuties 50.2 de l'index droit 21.2d, un troisième jeu de minuties 50.3 du majeur droit 21.3d, un quatrième jeu de minuties 50.4 de l'annulaire droit 21.4d, un cinquième jeu de minuties 50.5 de l'auriculaire droit 21.5d.

De la deuxième image préliminaire 52 de la main gauche 53 du premier individu 21 le microprocesseur 2 extrait un sixième jeu de minuties 52.1 du pouce gauche 21.1g, un septième jeu de minuties 52.2 de l'index gauche 21.2g, un huitième jeu de minuties 52.3 du majeur gauche 21.3g, un neuvième jeu de minuties 52.4 de l'annulaire gauche 21.4g, un dixième jeu de minuties 52.5 de l'auriculaire gauche 21.5g de la main gauche 53.

De manière homologue, le microprocesseur 2 extrait de la troisième image préliminaire 54 de la main droite 55 du deuxième individu 22 un onzième jeu de minuties 54.1 du pouce droit 22.1d, un douzième jeu de minuties 54.2 de l'index droit 22.2d, un treizième jeu de minuties 54.3 du majeur droit 22.3d, un quatorzième jeu de minuties 54.4 de l'annulaire droit 22.4d, un quinzième jeu de minuties 54.5 de l'auriculaire droit 22.5d de la main droite 55. De la quatrième image préliminaire 56 de la main gauche 57 du deuxième individu 22, le microprocesseur 2 extrait un seizième jeu de minuties 56.1 du pouce gauche 22.1g, un dix-septième jeu de minuties 56.2 de l'index gauche 22.2g, un dix-huitième jeu de minuties 56.3 du majeur gauche 22.3g, un dix-neuvième jeu de minuties 56.4 de l'annulaire gauche 22.4g, un vingtième jeu de minuties 56.5 de l'auriculaire gauche 22.5g.

Les jeux de minuties 50.1, 50.2, 50.3, 50.4, 50.5, 52.1, 52.2, 52.3, 52.4, 52.5 constituent un premier jeu 58 de données biométriques de référence qui est stocké dans le premier emplacement mémoire 30 de la mémoire 3.

Les jeux de minuties 54.1, 54.2, 54.3, 54.4, 54.5, 57.1, 57.2, 57.3, 57.4 et 57.5 constituent un deuxième jeu 59 de données biométriques de référence qui est stocké dans le deuxième emplacement mémoire 31 de la mémoire 3.

Au cours d'une deuxième étape et en référence à la figure 4, le technicien 20 déclenche à l'aide de l'écran tactile 5 la capture par le capteur optique 1 d'une première image 60 d'un premier dermatoglyphe 60.1 présent sur la scène 40. Le technicien peut, si nécessaire, utiliser des techniques connues (éclairage, filtrage...) pour faire ressortir, lors de la capture, le dermatoglyphe par rapport au support sur lequel le dermatoglyphe est déposé.

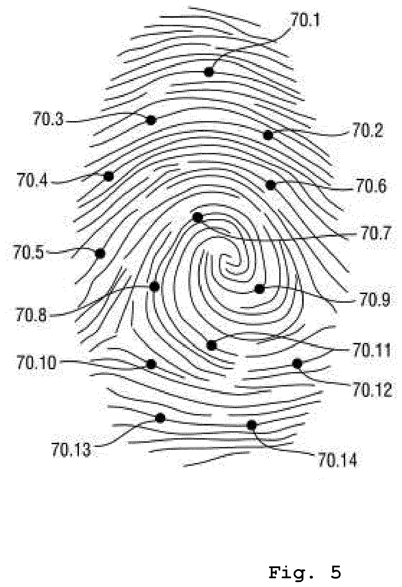

Le microprocesseur 2 extrait de la première image 60 un premier jeu de données biométriques candidates 70 comprenant ici quatorze minuties candidates 70.1 à 70.14 (figure 5). Le premier jeu de données biométriques candidates 70 est stocké dans le deuxième emplacement mémoire 31 de la mémoire 3.

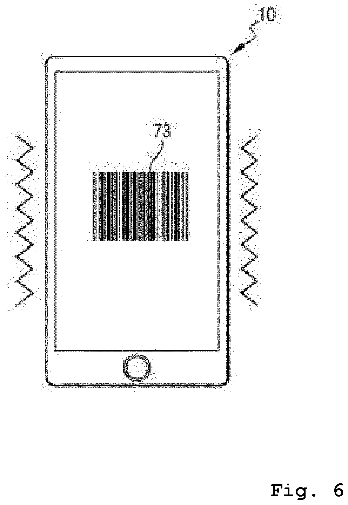

Selon une deuxième étape, l'algorithme 6 établit un premier score de similarité 61.1 entre le premier jeu de minuties candidates 70 et le premier jeu de minuties 50.1. De manière homologue, le microprocesseur 2 établit un deuxième score de similarité 61.2 entre le premier jeu de minuties candidates 70 et le deuxième jeu de minuties 50.2, un troisième score de similarité 61.3 entre le premier jeu de minuties candidates 70 et le troisième jeu de minuties 50.3, un quatrième score de similarité 61.4 entre le premier jeu de minuties candidates 70 et le quatrième jeu de minuties 50.4, un cinquième score de similarité 61.5 entre le premier jeu de minuties candidates 70 et le cinquième jeu de minuties 50.5, un sixième score de similarité 61.6 entre le premier jeu de minuties candidates 70 et le sixième jeu de minuties 52.1, un septième score de similarité 61.7 entre le premier jeu de minuties candidates 70 et le septième jeu de minuties 52.2, un huitième score de similarité 61.8 entre le premier jeu de minuties candidates 70 et le huitième jeu de minuties 52.3, un neuvième score de similarité 61.9 entre le premier jeu de minuties candidates 70 et le neuvième jeu de minuties 52.4, un dixième score de similarité 61.10 entre le premier jeu de minuties candidates 70 et la dixième jeu de minuties 52.5. Similairement, le microprocesseur 2 établit un score de similarité 61.11, 61.12, 61.13, 61.14, 61.15, 61.1 61.16, 61.17, 61.18, 61.19, 61.20 entre le premier jeu de minuties candidates 70 et chacun des jeux de minuties 54.1, 54.2, 54.3, 54.4, 54.5, 56.1, 56.2, 56.3, 56.4, 56.5. L'ensemble des scores de similarité 61.1 à 61.20 est stocké dans le deuxième emplacement mémoire 31. Selon une troisième étape, le microprocesseur 2 compare l'ensemble des scores de similarité 61.1 à 61.20 avec un premier seuil prédéterminé 72 préalablement entré dans le terminal mobile 10 et stocké dans le troisième emplacement mémoire 33. Selon une quatrième étape, lorsque le microprocesseur 2 identifie qu'aucun des scores de similarité 61.1 à 61.20 est supérieur au premier seuil prédéterminé 72, le microprocesseur 2 commande le vibreur 4 pour qu'il émette une alerte, par exemple sous la forme d'une vibration du terminal 10 signifiant au technicien 20 qu'il doit procéder à un prélèvement de matière biologique (figure 6) et si, au contraire, l'un des scores de similarité est supérieur au premier seuil, le microprocesseur 2 fait afficher un message demandant au technicien 20 une nouvelle capture d'image. Selon une cinquième étape, dans le cas où une première alerte a été émise, le microprocesseur 2 édite un premier identifiant 73, ici sous la forme d'un code-barres, qu'il stocke dans une table 74 du troisième emplacement mémoire 32 en association avec la première image 60. La table 74 est stocké dans le troisième emplacement mémoire 33 et peut comprendre un champ 75 comprenant une géolocalisation de la première image 60 ainsi qu'un horodatage de son relevé.

A chaque fois qu'une première alerte est émise, le technicien 20 procède à un prélèvement de matières biologiques directement sur le dermatoglyphe et/ou aux environs immédiats de celui-ci. Une fois le prélèvement effectué, le technicien 20 indique la nature du matériel biologique prélevé (cheveu, poil, liquide, dépôt graisseux...) dans la table 14 et le microprocesseur 2 fait afficher un message demandant au technicien 20 une nouvelle capture d'image.

Si le terminal est relié à une imprimante portative, il est envisageable que le terminal 10 imprime l'identifiant 73 sur une étiquette autocollante à coller sur le récipient contenant la matière biologique prélevée.

A l'issue des opérations de collecte de matériel biologique, le technicien 20 clôt la session de collecte sur le terminal 10. Le microprocesseur 2 commande alors l'effacement du premier jeu 58 et du deuxième jeu 59 de données biométriques de référence.

On obtient ainsi un terminal 10 et un procédé qui permettent de discriminer rapidement, et en temps réel, les prélèvements qui pourront se révéler « utiles » des prélèvements qui seront, de manière certaine, « inutiles », car correspondant à des occupants habituels de la scène 40.

Les éléments identiques ou analogues à ceux précédemment décrits porteront une référence numérique identique à celle-ci dans la description qui suit de deux autres modes de réalisation de l'invention.

Selon un deuxième mode de réalisation, l'étape de comparer les scores de similarité 61.1 à 61.20 au seuil prédéterminé 72 est effectuée par le microprocesseur 2 immédiatement après l'établissement de chacun des scores de similarité 61.1 à 61.20. Le microprocesseur 2, selon une étape supplémentaire, commande l'émission d'une deuxième alerte dès qu'un des scores de similarité 61.1 à 61.20 est supérieur à un deuxième seuil 76 prédéterminé et supérieur au premier seuil 72, ce qui caractérise que le premier dermatoglyphe 60.1 appartient au premier ou au deuxième individu. Un tel mode de réalisation permet d'améliorer la rapidité de discrimination entre un prélèvement « utile » et un prélèvement « inutile » en indiquant, dès que la certitude en est établie, que le premier dermatoglyphe 60.1 aboutira à un prélèvement inutile car il appartient au premier individu ou au deuxième individu. Ce mode de réalisation permet d'éviter que le processus de calcul des scores de similarité se poursuive alors que la correspondance entre le dermatoglyphe 60.1 et le premier ou le deuxième individu est établie, raccourcissant le délai de traitement.

Selon un troisième mode de réalisation représenté en figure 73, le premier jeu 58 de données biométriques de référence et le deuxième jeu 59 de données biométriques de référence ont été extraits lors d'une opération préalable (comme par exemple lors de la réalisation de documents d'identité) et sont stockés sur un serveur distant 62. Le terminal mobile 10 comprend un module GSM 7 qui, lors de l'utilisation du terminal 10, se connecte de manière connue au serveur distant 62 par exemple via le réseau Internet en ayant de préférence recours à un canal de communication sécurisée de type VPN. Une fois le terminal 10 en lien avec le serveur distant 62, le terminal 10 télécharge le premier jeu 58 de données biométriques de référence et le deuxième jeu 59 de données biométriques de référence depuis le serveur et procède à l'établissement des scores de similarité 61.1 à 61.20. A l'issue des opérations de collecte de matériel biologique, le technicien 20 clôt la session de collecte sur le terminal 10. Le microprocesseur 2 commande alors l'effacement du premier jeu 58 et du deuxième jeu 59 de données biométriques de référence.

Selon une autre version du troisième mode de réalisation, le terminal 10 consulte le premier jeu 58 de données biométriques de référence et le deuxième jeu 59 de données biométriques de référence pour procéder à l'établissement des scores de similarité 61.1 à 61.20 sans que le terminal télécharge le premier jeu 58 et le deuxième jeu 59

Dans cette dernière version, lorsque le technicien 20 clôt la session de collecte sur le terminal 10, Le microprocesseur 2 commande alors l'envoi d'un message sécurisé au serveur distant 62 pour qu'il procède à l'effacement du premier jeu 58 et du deuxième jeu 59 de données biométriques de référence.

Bien entendu, l'invention n'est pas limitée à ce qui vient d'être décrit, mais englobe toute variante entrant dans le cadre de l'invention défini par les revendications.

En particulier,
- bien qu'ici le terminal soit un téléphone mobile intelligent, l'invention s'applique également à d'autres types de terminaux comme par exemple un ordinateur portable, une tablette, un dispositif de scannage d'une scène d'investigation ou un terminal dédié ;
- bien qu'ici le terminal comprenne un capteur optique de type CCD, l'invention s'applique également à d'autres types de dispositifs de capture d'image adapté pour acquérir un dermatoglyphe comme par exemple un capteur CMOS, un capteur de champ électrique ou un capteur ultrasonique ;
- bien qu'ici le terminal comprenne un microprocesseur, l'invention s'applique également à d'autres types d'unité électronique de traitement comme par exemple un processeur, un microcontrôleur, un circuit logique programmable (FPGA) ou câblé ;
- bien qu'ici le terminal comprenne un vibreur, l'invention s'applique également à d'autres types de dispositif d'alerte comme par exemple un avertisseur sonore ou un avertisseur lumineux, les dispositifs d'alerte pouvant être combinés ;
- bien qu'ici le terminal comprenne un algorithme de matching de minuties, l'invention s'applique également à d'autres moyens de comparer la première image avec des premiers éléments d'un premier ensemble de données comme par exemple un algorithme de corrélation d'image ou un algorithme d'analyse de crêtes ;
- bien qu'ici le microprocesseur réalise une extraction de quatorze minuties candidates du premier dermatoglyphe, l'invention s'applique également à une extraction d'un nombre différents de minuties candidates comme par exemple plus de quatorze ou moins de quatorze ;
- bien qu'ici le premier identifiant soit un code barre, l'invention s'applique également à d'autres types de premier identifiant comme par exemple une référence alphanumérique ou un numéro de prélèvement ;
- bien qu'ici le premier identifiant soit stocké en association avec la première image et un horodatage, l'invention s'applique également à un stockage du premier identifiant avec d'autres types d'informations comme par exemple la référence d'un dossier, le nom du technicien en charge des prélèvements, une référence du terminal 10, une géolocalisation ou un certificat d'étalonnage du terminal ;
- bien qu'ici le premier et le deuxième jeu de données biométriques de référence soit téléchargés depuis le serveur distant, l'invention s'applique également à un premier jeu de données biométriques téléchargé et un deuxième jeu de données biométrique acquis sur le premier ou le deuxième individu ;
- bien qu'ici les jeux de données biométriques de référence soient effacés à l'issue des opérations de collecte de matériel biométrique, l'invention s'applique également à un procédé dans lequel les jeux de données biométriques de référence seraient conservés à l'issue des opérations de collecte.

## Revendications

1. Procédé de collecte de matériel biologique prélevé sur une scène de crimes à l'aide d'un terminal mobile (10) manipulé par un technicien (20), ledit terminal mobile (10) comprenant une unité électronique (2) de traitement reliée à un dispositif de capture d'image (1) et à un organe d'alerte (4) pour commander ceux-ci, le dispositif de capture (1) ayant des caractéristiques optiques adaptées pour acquérir des images de dermatoglyphes (60.1);
le procédé de collecte comprenant les étapes suivantes mises en oeuvre par le terminal mobile :
- acquérir une première image (60) d'un premier dermatoglyphe (60.1) et en extraire un premier jeu de données biométriques candidates (70) ;
- comparer le jeu de données biométriques candidates (70) à des jeux de données biométriques de référence (58 ;59) et déterminer un score de similarité (61.1-61.20) entre le jeu de données biométriques candidates (70) et chacun des jeux de données biométriques de référence (58 ;59);
- comparer les scores de similarité (61.1-61.20) avec un premier seuil prédéterminé (72);
- lorsqu'aucun des scores de similarité (61.1-61.20) n'est supérieur au premier seuil prédéterminé (72), émettre une première alerte ;
- lorsque la première alerte est émise, procéder à une collecte de matériel biologique dans une zone voisine du premier dermatoglyphe (60.1), cette étape étant mise en oeuvre par le technicien (20).

2. Procédé selon la revendication 1, comprenant l'étape supplémentaire mise en oeuvre par le terminal mobile, lorsque la première alerte est émise, d'éditer un premier identifiant (73) et de stocker le premier identifiant (73) en association avec la première image (60).

3. Procédé selon la revendication 2, dans lequel le premier identifiant (73) comprend un code barre.

4. Procédé selon l'une quelconque des revendications précédentes, comprenant l'étape supplémentaire mise en oeuvre par le terminal mobile d'émettre une deuxième alerte lorsqu'un des scores de similarité (61.1-61.20) est supérieur à un deuxième seuil prédéterminé (76).

5. Procédé selon l'une quelconque des revendications précédentes, comprenant une étape préliminaire mise en oeuvre par le terminal mobile d'acquérir les jeux de données biométriques de référence (58 ; 59) à l'aide du dispositif de capture d'image (1).

6. Procédé selon l'une des revendications 1 à 4, dans lequel les jeux de données biométriques de référence (55 ; 59) sont au moins partiellement stockés sur un serveur distant (62) et le terminal mobile (10) comprend des moyens de communication (7) avec le serveur distant (62) .

7. Procédé selon l'une quelconque des revendications précédentes, comprenant une étape mise en oeuvre par le terminal mobile d'effacer les jeux de données biométriques de référence (58; 59) à l'issue des opérations de collecte de matériel biologique.

8. Terminal mobile, comprenant une unité électronique de traitement (2) reliée à un dispositif de capture d'image (1) et à un organe d'alerte (4) pour commander ceux-ci, le dispositif de capture d'image (1) ayant des caractéristiques optiques adaptées pour acquérir des images de dermatoglyphes (60.1); et dans lequel l'unité de traitement (2) est programmée pour mettre en oeuvre le procédé selon l'une quelconque des revendications 1 à 7.

9. Terminal mobile (10) selon la revendication 8, dans lequel l'organe d'alerte (4) comprend un avertisseur sonore et/ou un avertisseur lumineux et/ou un vibreur.

10. Terminal mobile (10) selon l'une quelconque des revendications 8 ou 9, dans lequel le dispositif de capture d'image (1) comprend un capteur optique.

## Patentansprüche

1. Verfahren zum Sammeln von an einem Tatort entnommenem biologischem Material mit Hilfe eines von einem Techniker (20) gehandhabten mobilen Endgeräts (10), wobei das mobile Endgerät (10) eine elektronische Verarbeitungseinheit (2) enthält, die mit einer Bildaufnahmevorrichtung (1) und mit einer Alarmeinrichtung (4) verbunden ist, um diese zu steuern, wobei die Aufnahmevorrichtung (1) optische Eigenschaften hat, die geeignet sind, Bilder von Dermatoglyphen (60.1) zu erfassen;
wobei das Sammelverfahren die folgenden vom mobilen Endgerät durchgeführten Schritte enthält:
- Erfassen eines ersten Bilds (60) eines ersten Dermatoglyphen (60.1) und Entnahme daraus eines ersten Satzes von biometrischen Kandidat-Daten (70) ;
- Vergleich des Satzes von biometrischen Kandidat-Daten (70) mit Sätzen von biometrischen Bezugsdaten (58;59) und Bestimmen eines Ähnlichkeitsscores (61.1-61.20) zwischen dem Satz von biometrischen Kandidat-Daten (70) und jedem der Sätze von biometrischen Bezugsdaten (58;59);
- Vergleich der Ähnlichkeitsscores (61.1-61.20) mit einer ersten vorbestimmten Schwelle (72);
- wenn keiner der Ähnlichkeitsscores (61.1-61.20) höher ist als die erste vorbestimmte Schwelle (72), Ausgabe eines ersten Alarms;
- wenn der erste Alarm ausgegeben wird, Durchführen eines Sammelns von biologischem Material in einem Bereich nahe dem ersten Dermatoglyphen (60.1), wobei dieser Schritt vom Techniker (20) durchgeführt wird.

2. Verfahren nach Anspruch 1, das, wenn der erste Alarm ausgegeben wird, den vom mobilen Endgerät durchgeführten zusätzlichen Schritt enthält, eine erste Kennung (73) zu editieren und die erste Kennung (73) zusammen mit dem ersten Bild (60) zu speichern.

3. Verfahren nach Anspruch 2, wobei die erste Kennung (73) einen Strichcode enthält.

4. Verfahren nach einem der vorhergehenden Ansprüche, das den vom mobilen Endgerät durchgeführten zusätzlichen Schritt enthält, einen zweiten Alarm auszugeben, wenn einer der Ähnlichkeitsscores (61.1-61.20) höher ist als eine zweite vorbestimmte Schwelle (76).

5. Verfahren nach einem der vorhergehenden Ansprüche, das einen vom mobilen Endgerät durchgeführten vorhergehenden Schritt enthält, die Sätze von biometrischen Bezugsdaten (58; 59) mit Hilfe der Bildaufnahmevorrichtung (1) zu erfassen.

6. Verfahren nach einem der Ansprüche 1 bis 4, wobei die Sätze von biometrischen Bezugsdaten (55; 59) mindestens teilweise auf einem fernen Server (62) gespeichert sind, und das mobile Endgerät (10) Einrichtungen zur Kommunikation (7) mit dem fernen Server (62) enthält.

7. Verfahren nach einem der vorhergehenden Ansprüche, das einen vom mobilen Endgerät durchgeführten Schritt enthält, die Sätze von biometrischen Bezugsdaten (58; 59) am Ende der Sammelvorgänge von biologischem Material zu löschen.

8. Mobiles Endgerät, das eine elektronische Verarbeitungseinheit (2) enthält, die mit einer Bildaufnahmevorrichtung (1) und mit einer Alarmeinrichtung (4) verbunden ist, um diese zu steuern, wobei die Bildaufnahmevorrichtung (1) optische Eigenschaften hat, die geeignet sind, Bilder von Dermatoglyphen (60.1) zu erfassen; und wobei die Verarbeitungseinheit (2) programmiert ist, das Verfahren nach einem der Ansprüche 1 bis 7 durchzuführen.

9. Mobiles Endgerät (10) nach Anspruch 8, wobei die Alarmeinrichtung (4) ein akustisches Meldegerät und/oder einen Leuchtmelder und/oder einen Vibrationsalarm enthält.

10. Mobiles Endgerät (10) nach einem der Ansprüche 8 oder 9, wobei die Bildaufnahmevorrichtung (1) einen optischen Sensor enthält.

## Claims

1. Method for collecting biological material from a crime scene, using a mobile terminal (10) manipulated by a technician (20), said mobile terminal (10) comprising an electronic processing unit (2) that is connected to an image-capturing device (1) and to an alarm-generating mechanism (4) with a view to controlling said device and mechanism, the capturing device (1) having optical characteristics making it suitable for acquiring dermatoglyphic images (60.1),
the collecting method comprising the following steps, implemented by the mobile terminal:
- acquiring a first image (60) of a first dermatoglyphic print (60.1) and extracting therefrom a first set (70) of candidate biometric data;
- comparing the set (70) of candidate biometric data to sets (58; 59) of reference biometric data and determining a similarity score (61.1-61.20) between the set (70) of candidate biometric data and each of the sets (58; 59) of reference biometric data;
- comparing the similarity scores (61.1-61.20) with a first predetermined threshold (72);
- when none of the similarity scores (61.1-61.20) is higher than the first predetermined threshold (72), generating a first alarm;
- when the first alarm is generated, collecting biological material in a region neighbouring the first dermatoglyphic print (60.1), this step being carried out by the technician (20).

2. Method according to Claim 1, comprising the additional step, carried out by the mobile terminal, when the first alarm is generated, of editing a first identifier (73) and storing the first identifier (73) in association with the first image (60).

3. Method according to Claim 2, wherein the first identifier (73) comprises a barcode.

4. Method according to any one of the preceding claims, comprising the additional step, implemented by the mobile terminal, of generating a second alarm when one of the similarity scores (61.1-61.20) is higher than a second predetermined threshold (76).

5. Method according to any one of the preceding claims, comprising a preliminary step, implemented by the mobile terminal, of acquiring the sets (58; 59) of reference biometric data using the image-capturing device (1).

6. Method according to one of Claims 1 to 4, wherein the sets (55; 59) of reference biometric data are at least partially stored on a remote server (62) and the mobile terminal (10) comprises means (7) for communicating with the remote server (62).

7. Method according to any one of the preceding claims, comprising a step, implemented by the mobile terminal, of deleting the sets (58; 59) of reference biometric data at the end of the operations of collecting biological material.

8. Mobile terminal comprising an electronic processing unit (2) that is connected to an image-capturing device (1) and to an alarm-generating mechanism (4) with a view to controlling said device and mechanism, the image-capturing device (1) having optical characteristics making it suitable for acquiring dermatoglyphic images (60.1); and wherein the processing unit (2) is programmed to implement the method according to any one of Claims 1 to 7.

9. Mobile terminal (10) according to Claim 8, wherein the alarm-generating mechanism (4) comprises an audio warning device and/or a light-emitting warning device and/or a vibrator.

10. Mobile terminal (10) according to either one of Claims 8 and 9, wherein the image-capturing device (1) comprises an optical sensor.
